# DEMANDE DE BREVET EUROPEEN

(11) **EP 4 206 092 A1**
(43) Date de publication de la demande: **05.07.2023**
(21) Numéro de dépôt: 23150074.5
(22) Date de dépôt: 03.01.2023
(51) Int. Cl.: B65F 1/14, B60B 37/10

(54) **MOYENS DE FIXATION D'UNE ROUE DE BAC DE COLLECTE DE DÉCHETS**

(30) Priorité: 04.01.2022 FR 2200049
(71) Demandeur: SULO France, 69800 Saint-Priest (FR)
(72) Inventeur: MEUILLET, Emmanuel, 69800 Saint-Priest (FR)
(74) Mandataire: LLR

(57) **Abrégé**

L'invention concerne une roue (2) de bac de collecte de déchets comprenant un moyeu (4) réalisé en matière plastique, le moyeu (4) comprenant un orifice d'insertion (6) d'un essieu (3) réalisé sur une face (11) du moyeu (4), au moins un élément de verrouillage (12) de la roue (2) sur l'essieu (3), venu de moulage avec le moyeu (4), déformable élastiquement, et s'étendant à l'intérieur de l'orifice d'insertion (6), l'élément de verrouillage (12) comprenant un élément sacrificiel configuré pour être en contact avec l'essieu (3).

## Description

L'invention concerne les bacs de collecte de déchets et plus particulièrement les roues de tels bacs de collecte de déchets.

Les bacs de collecte de déchets aériens comprennent plusieurs roues pour permettre de les déplacer afin, par exemple, de procéder à leur vidage. Ces bacs peuvent généralement comprendre deux roues (pour des bacs de collectes de faible volume présents chez les particuliers), mais également trois roues ou quatre roues (pour des bacs de collecte de gros volume). Ces roues sont rapportées sur les bacs de collecte après moulage de ces derniers.

De manière conventionnelle, un bac de collecte de déchets comporte un essieu, de préférence un axe métallique, destiné à supporter les roues. Cet essieu peut par exemple être tubulaire et comprendre, à proximité de ses extrémités, des gorges de forme annulaire et de diamètre inférieur au reste de l'essieu.

Chaque moyeu de roue comprend un trou borgne dans lequel une extrémité de l'essieu peut être logée. Chaque moyeu comprend également un moyen de verrouillage de la roue sur l'essieu comportant un orifice débouchant dans le trou borgne coopérant avec une goupille et un ressort logés dans cet orifice. Le ressort, typiquement un ressort de compression, permet de s'assurer que la goupille s'étende en partie dans le trou borgne, l'autre partie restant à l'intérieur de l'orifice.

Lors du montage, l'essieu entre dans le trou borgne et pousse la goupille. Cela peut être facilité par la réalisation d'un chanfrein sur chaque extrémité de l'essieu. La goupille entre dans l'orifice et le ressort est comprimé. Une fois que la goupille est face à la gorge, la goupille est poussée par le ressort dans cette partie et est maintenue par ce même ressort à l'intérieur de la gorge (la goupille s'étendant en même temps dans la gorge et dans l'orifice). Cela permet de verrouiller la roue sur l'essieu.

Ce type de fixation est satisfaisant mais comprend cependant quelques inconvénients. Le nombre de pièces utilisées est important et les reprises sont multiples. Il est en effet nécessaire, après moulage du moyeu (ce dernier étant classiquement réalisé en matière plastique), de monter l'ensemble formé du ressort et de la goupille dans l'orifice.

De plus, et pour démonter la roue, par exemple pour un remplacement de cette dernière, une lumière supplémentaire est réalisée à l'arrière de la roue sur la face interne du moyeu et donne accès à la goupille. Il faut dès lors insérer un objet tel qu'un tournevis plat dans cette lumière pour relever la goupille et ainsi désengager la roue de l'essieu. Cette manipulation est quelque peu contraignante.

La demande FR 2 808 243 A1 divulgue une roue de bac de collecte de déchets dont le moyeu comprend des éléments de verrouillage d'un essieu déformable élastiquement. Une roue selon ce document peut s'user lors de l'utilisation d'un bac comprenant des roues selon ce document.

L'invention a notamment pour but de fournir une roue de bac de collecte de déchets plus simple dans sa conception ainsi que dans son démontage de l'essieu.

A cet effet, l'invention a pour objet une roue de bac de collecte de déchets comprenant un moyeu réalisé en matière plastique, le moyeu comprenant un orifice d'insertion d'un essieu réalisé sur une face du moyeu, au moins un élément de verrouillage de la roue sur l'essieu, venu de moulage avec le moyeu, déformable élastiquement, et s'étendant à l'intérieur de l'orifice d'insertion, l'élément de verrouillage comprenant un élément sacrificiel configuré pour être en contact avec l'essieu.

Ainsi, le verrouillage du moyeu, et donc de la roue une fois qu'un bandage de roue est placé sur le moyeu, est réalisé par un organe de verrouillage déjà présent dans le moyeu après moulage de ce dernier.

Cela conduit à une architecture plus simple du moyeu qui ne nécessite plus un orifice pour y loger un ressort et une goupille ainsi qu'une lumière additionnelle pour désengager la goupille et ainsi séparer la roue de l'essieu. Une extrémité d'un essieu pourra collaborer avec l'organe de verrouillage réalisé lors du moulage du moyeu afin de fixer la roue sur l'essieu.

Enfin, la présence d'un élément sacrificiel permet de minimiser l'usure de l'élément de verrouillage lors de l'utilisation d'un bac de collecte de déchets car l'essieu frottera contre l'élément sacrificiel de la roue en rotation.

Suivant d'autres caractéristiques optionnelles de la roue prises seules ou en combinaison :
- L'élément de verrouillage est formé par un clip de verrouillage. Cela permet de réaliser un élément de verrouillage de manière simplifiée et fiable ;
- Le moyeu comprend plusieurs clips de verrouillage disposés à intervalle régulier. Cette disposition assure un verrouillage optimal et homogène ;
- L'élément sacrificiel est formé par un bossage venu de moulage avec l'élément de verrouillage. Il s'agit d'une manière aisée de réaliser ledit élément sacrificiel ;
- Le moyeu comprend un tube d'insertion de l'essieu s'étendant à partir de l'orifice d'insertion. Cela permet une interaction plus importante entre l'essieu et la roue ;
- Le moyeu comprend plusieurs nervures de renfort s'étendant entre le tube d'insertion et la face du moyeu. Cela permet de solidifier l'ancrage du tube d'insertion sur la base du moyeu ;
- Le moyeu comprend un relief sur sa face externe formant un fond de l'orifice d'insertion. Ce dernier permet d'allonger la portion de l'essieu entrant dans le moyeu ; et
- La paroi formant le relief est partiellement ajourée. Cela permet de faciliter le démoulage du moyeu et permet d'interagir avec l'élément de verrouillage depuis l'extérieur de la roue.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une première vue en perspective d'un moyeu d'une roue selon l'invention et selon un premier plan de coupe,
[Fig. 2] la figure 2 est une seconde vue en perspective du moyeu de la figure 1 ;
[Fig. 3] la figure 3 est une vue en perspective d'une partie d'un essieu pouvant collaborer avec une roue selon l'invention,
[Fig. 4] la figure 4 est une vue en perspective d'un ensemble formé d'un moyeu d'une roue selon l'invention et d'un essieu, et selon un second plan de coupe, et
[Fig. 5] la figure 5 est vue d'une face externe du moyeu de l'ensemble de la figure 4.

### Description détaillée

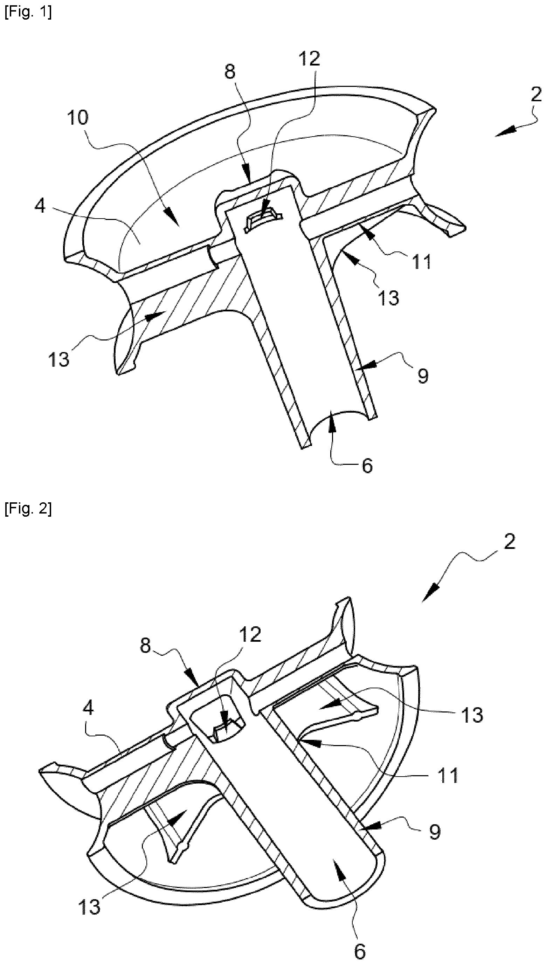

On se réfère désormais aux figures 1 et 2 illustrant une partie d'une roue 2 de bac de collecte de déchets, la roue 2 étant scindé selon un premier plan de coupe.

Le bac de collecte, non représenté sur les figures, ne fera pas l'objet ici d'une description détaillée. Il s'agit par exemple d'un bac de collecte présent chez un particulier et équipé de deux roues à sa base, le bac étant basculé sur ces deux roues pour être déplacé en toute facilité.

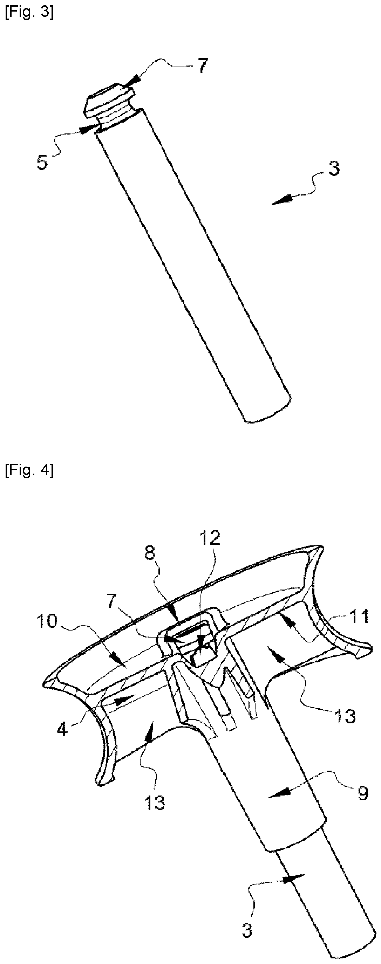

Un essieu 3 (représenté sur la figure 3), classiquement cylindrique et destiné à porter les roues est placé dans des parois parallèles entre elles et dans lesquelles des orifices traversants sont ménagés, ces parois s'étendant classiquement entre la paroi inférieure et une paroi latérale du conteneur. Un renfoncement peut être réalisé à ce niveau (i.e. entre la paroi inférieure et une paroi latérale du conteneur) afin que l'essieu 3 et les parois le portant s'étendent dans ce renfoncement et ce à des fins de protection de ces derniers.

Une roue 2 peut être montée à chaque extrémité de l'essieu 3, un tel montage étant par exemple visible sur la figure 4. Pour se faire, l'essieu 3 comprend des moyens permettant la fixation de la roue. Comme nous le verrons par la suite, la roue 2 comprend un organe de verrouillage lui permettant d'être fixé à l'essieu 3. Dès lors, l'essieu 3 comprend des moyens lui permettant de coopérer avec un ou des éléments de verrouillage. Il peut par exemple s'agir d'un renfoncement annulaire (ou gorge) 5 réalisé à proximité des extrémités de l'essieu 3. Il pourrait également s'agir d'un ou plusieurs orifices ménagés dans l'essieu, toujours à proximité des extrémités de l'essieu, et formant un ou plusieurs logements pour un ou plusieurs éléments de verrouillage de la roue 2 à l'essieu 3.

L'essieu 3 peut également comprendre des extrémités comprenant chacune un chanfrein 7 afin de faciliter le montage des roues 2.

Chaque roue 2 comprend un moyeu 4 sur lequel un bandage (non représenté) peut être placé (il peut être monté sur le moyeu 4 ou moulé sur ce dernier). Le moyeu peut de préférence être réalisé en matière plastique, de préférence en polyéthylène haute densité (ou PEHD). Le bandage peut quant à lui être réalisé en caoutchouc ou encore dans un matériau formé par un mélange de poudre de caoutchouc et de polypropylène. Bien entendu, ces matériaux ne sont listés qu'à titre d'exemple.

Le moyeu 4 comprend un orifice d'insertion 6 de l'essieu 3 sur une face, ici sa face interne 11, et par lequel l'essieu 3 peut être inséré. Cet orifice d'insertion 6 peut être entouré d'un tube d'insertion (ou cheminée) 9 s'étendant à partir de la face interne 11 du moyeu 4 afin de s'assurer d'un bon ancrage de l'essieu 3 sur la roue 2 (une portion plus importante de l'essieu 3 s'étend dans le moyeu 4). Le tube d'insertion 9 peut s'étendre perpendiculairement à la face interne 11 du moyeu 4, des nervures de renforts 13 pouvant s'étendre de la face interne 11 au tube d'insertion 9.

Les parois formant le fond de l'orifice d'insertion 6 forment un relief 8 sur une face externe 10 du moyeu 4, comme cela est visible sur les figures 1 et 2. En d'autres termes, l'extrémité de l'essieu 3 arrive en butée au fond de l'orifice d'insertion 6 et contre une face de la paroi externe formant le relief 8. Le relief 8 a de préférence une forme complémentaire de l'essieu 3, par exemple une forme tubulaire comme représenté sur les figures 1, 2, 4 et 5. Ces parois peuvent être ajourées comme cela est visible sur ces figures par exemple pour faciliter le démoulage du moyeu 4 et former une voie d'accès aux éléments de verrouillage 12.

Le moyeu comprend au moins un élément de verrouillage 12. Cet élément de verrouillage 12, déformable élastiquement, est venu de moulage avec le moyeu 4 et s'étend à l'intérieur de l'orifice d'insertion 6.

Comme cela est visible sur les figures 1 et 2, et selon un mode de réalisation préférentiel, l'élément de verrouillage 12 est formé par un clip de verrouillage. Ce dernier comprend un pied s'étendant à partir du moyeu et d'une extrémité libre s'étendant dans des moyens de coopération présents sur l'essieu 3 tels que le renfoncement annulaire 5 ou encore des orifices formant des logements pour le clip de fixation.

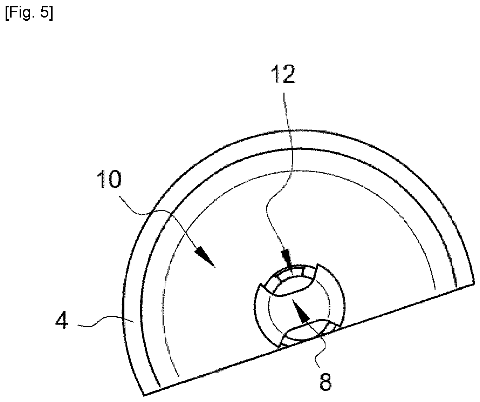

De manière préférentielle, le moyeu 4 comprend deux clips de verrouillage placés à l'intérieur de l'orifice d'insertion 6 en étant diamétralement opposés l'un à l'autre. Bien entendu, le nombre de clips de verrouillage, et plus généralement d'éléments de fixation 12, peut varier, notamment en fonction des coopérations envisagées avec l'essieu 3. Par exemple, plusieurs clips de verrouillage peuvent s'étendre dans le renfoncement annulaire 5. La figure 5 illustre un clip de verrouillage dont l'extrémité libre s'étend dans le renfoncement annulaire 5. De manière préférentielle, les clips de verrouillage sont disposés à intervalle régulier dans l'orifice d'insertion 6 afin d'assurer un verrouillage optimal et homogène.

Au moins un élément de verrouillage 12, par exemple à une extrémité libre des clips de verrouillage, comprend un élément sacrificiel configuré pour être en contact avec l'essieu 3. Un tel élément permet de minimiser toute usure du ou des éléments de verrouillage 12 si ces derniers sont amenés à avoir un mouvement relatif par rapport à l'essieu 3. Par exemple, et dans le cas de figure dans lequel un ou plusieurs éléments de verrouillage 12 s'étendent dans un renfoncement annulaire 5, ces derniers vont être amenés à frotter contre ce renfoncement annulaire 5 de l'essieu 3 réalisé en métal. Le frottement des roues 2 en rotation, et donc des éléments de verrouillage 12, contre le renfoncement annulaire 5 de l'essieu 3, qui lui peut être fixe ou au moins ne pas tourner en même temps que les roues 2, ne conduit dès lors qu'à une usure du ou des éléments sacrificiels et non d'une partie plus importante des éléments de verrouillage 12. On évite dès lors une usure prématurée de ces derniers.

L'élément sacrificiel peut être formé par un bossage venu de moulage avec l'élément de verrouillage 12, ce qui simplifie la conception de l'élément de verrouillage 12 et plus globalement du moyeu 4 (le moyeu 4 est prêt à être utilisé dès le moulage). Alternativement, il est possible de reprendre le moyeu 4 moulé afin de rapporter un élément sacrificiel sur le ou les éléments de verrouillage 12. Cela permet un remplacement du seul élément sacrificiel usé mais également d'utiliser un élément sacrificiel réalisé dans un matériau différent de celui du ou des éléments de verrouillage 12. Il pourrait s'agir un élément sacrificiel réalisé dans un matériau plus résistant que celui de l'élément de verrouillage 12, par exemple en métal, et/ou ayant un coefficient de frottement moins élevé que celui de l'élément de verrouillage 12.

Lors du montage d'une roue 2, l'essieu 3 est inséré dans l'orifice d'insertion 6, par exemple par le tube d'insertion 9.

L'essieu 3 est poussé jusqu'à atteindre le ou les éléments de verrouillage 12. L'essieu 3 va alors déformer le ou les éléments de verrouillage 12. Cela peut être facilité par la présence de chanfrein 7 au niveau d'un extrémité de l'essieu 3.

Le ou les éléments de verrouillage 12 demeurent à l'état déformé jusqu'à ce qu'ils soient en regard d'un ou plusieurs renfoncements avec lesquels ils peuvent collaborer.

Dès lors, le ou les éléments de verrouillage 12 reprennent leur forme initiale en étant introduits dans le ou les renfoncements complémentaires. Ainsi, la roue 2 est verrouillée sur l'essieu 3. Elle peut être libre de pivoter seule ou de manière solidaire à l'essieu 3 en fonction du type de verrouillage choisi (i.e. verrouillage avec ou sans liberté de rotation par rapport à l'essieu 3).

### Liste de références

- 2 :: roue
- 3 :: essieu
- 4 :: moyeu
- 5 :: renfoncement annulaire
- 6 :: orifice d'insertion
- 7 :: chanfrein
- 8 :: relief
- 9 :: tube d'insertion
- 10 :: face externe
- 11 :: face interne
- 12 :: élément de verrouillage
- 13 :: nervure de renfort

## Revendications

1. Roue (2) de bac de collecte de déchets comprenant un moyeu (4) réalisé en matière plastique, le moyeu (4) comprenant un orifice d'insertion (6) d'un essieu (3) réalisé sur une face (11) du moyeu (4), la roue comprenant au moins un élément de verrouillage (12) de la roue (2) sur l'essieu (3), venu de moulage avec le moyeu (4), déformable élastiquement, et s'étendant à l'intérieur de l'orifice d'insertion (6), **caractérisée en ce que** l'élément de verrouillage (12) comprend un élément sacrificiel configuré pour être en contact avec l'essieu (3).

2. Roue (2) de bac de collecte de déchets selon la revendication 1, dans laquelle l'élément de verrouillage (12) est formé par un clip de verrouillage.

3. Roue (2) de bac de collecte de déchets selon la revendication 2, dans laquelle le moyeu (4) comprend plusieurs clips de verrouillage disposés à intervalle régulier.

4. Roue (2) de bac de collecte de déchets selon l'une quelconque des revendications précédentes, dans laquelle l'élément sacrificiel est formé par un bossage venu de moulage avec l'élément de verrouillage (12).

5. Roue (2) de bac de collecte de déchets selon l'une quelconque des revendications précédentes, dans laquelle le moyeu (4) comprend un tube d'insertion (9) de l'essieu (3) s'étendant à partir de l'orifice d'insertion du moyeu (4).

6. Roue (2) de bac de collecte de déchets selon la revendication 5, dans laquelle le moyeu (4) comprend plusieurs nervures de renfort (13) s'étendant entre le tube d'insertion (9) et la face (11) du moyeu (4).

7. Roue (2) de bac de collecte de déchets selon l'une quelconque des revendications précédentes, dans laquelle le moyeu (4) comprend un relief (8) sur sa face externe (10) formant un fond de l'orifice d'insertion (6).

8. Roue (2) de bac de collecte de déchets selon la revendication 7, dans laquelle la paroi formant le relief (8) est partiellement ajourée.
